Europäisches Patentamt

(19) European Patent Office

Office européen des brevets

(11) Publication number : **0 287 645 B1**

## (12) EUROPEAN PATENT SPECIFICATION

(45) Date of publication of patent specification :
**02.01.92 Bulletin 92/01**

(21) Application number : **87907279.1**

(22) Date of filing : **16.10.87**

(86) International application number :
**PCT/US87/02723**

(87) International publication number :
**WO 88/02944 21.04.88 Gazette 88/09**

(51) Int. Cl.⁵ : **H02J 1/00, H04B 5/00,
H01F 40/00, H01F 17/06,
G05F 3/00**

(54) INDUCTIVE COUPLED POWER SYSTEM.

(30) Priority : **16.10.86 US 920108**

(43) Date of publication of application :
**26.10.88 Bulletin 88/43**

(45) Publication of the grant of the patent :
**02.01.92 Bulletin 92/01**

(84) Designated Contracting States :
**DE FR GB**

(56) References cited :
**EP-A- 0 260 725
DE-A- 1 463 449
US-A- 1 866 751
US-A- 2 415 688
US-A- 2 567 431
US-A- 2 851 592**

(56) References cited :
**US-A- 3 368 137
US-A- 3 401 469
US-A- 3 978 388
US-A- 4 352 200
US-A- 4 428 078**

(73) Proprietor : **SONY TRANS COM INC.
40 Parker
Irvine, California (US)**

(72) Inventor : **KELLEY, Arthur, W.
2005 Tiverton Court
Raleigh, NC 27615 (US)**
Inventor : **OWENS, William, R.
4879 Linden Road Apt. No. 142
Rockford, IL 61109 (US)**

(74) Representative : **SERJEANTS
25, The Crescent King Street
Leicester, LE1 6RX (GB)**

## Description

This invention relates to an inductive coupled power system comprising a transmission circuit.

### Background of the Invention

Kuo U.S. patent 4,428,078 shows an inductive coupled power and signal system for aircraft passenger entertainment. The primary circuit transmission line extends in a large loop throughout the aircraft cabin. Each seat group has a pickup loop inductively coupled to the transmission line. The system provides electrical power and information signals, as an audio program, to receive circuits at the aircraft seats through inductive coupling which permits the seat group spacing to be changed without reconnecting or rewiring the electrical circuits. The Kuo system is inefficient and the large loop transmission line develops a high level magnetic field which can cause interference with other aircraft systems.

Furthermore EP-A-0260725, which is a document falling within the terms fo Article 54, paragraph 3, EPC, discloses a system for inductively coupling AC power from a power source having two terminals to each of a plurality of receiver units, comprising a transmission circuit having a conductor network connected to the terminals of the power source and extending through an area containing the receiver units from the power source to a remote location. The conductor network has two series-connected legs of which the first leg extends from a first terminal of the power source to the remote location and the second leg, which extends from the remote location to the second terminal of the power source is spaced apart from but closely adjacent to the first leg.

### Summary of the Invention

The power system disclosed herein utilizes a novel transmission circuit which minimizes the magnetic field.

According to the invention this object is achieved by a system for inductively coupling AC power from a power source having two terminals to each of a plurality of receiver units, comprising a transmission circuit having a conductor network connected to the terminals of the power source and extending through an area containing the receiver units from the power source to a remote location, CHARACTERISED IN THAT the conductor network has two series-connected legs of which the first leg extends from a first terminal of the power source to the remote location and the second leg, which extends from the remote location to the second terminal of the power source is divided into two segments positioned one on each side and spaced apart from but closely adjacent to the first leg.

Further features of the invention are specified in the dependent claims 2 to 10.

Further features and advantages of the invention will readily be apparent from the following specification and from the drawings, in which:

Figure 1 is a diagrammatic illustration of the power system installed in an aircraft cabin;

Figure 2 is a diagrammatic illustration of the power transmission circuit with two secondary pickup assemblies;

Figure 3 is a perspective of a section of the transmission circuit with a secondary pickup assembly;

Figure 4 is an enlarged perspective cross-section through the transmission circuit and secondary pickup;

Figure 5 is an enlarged plan view of a seat group, the seat track, the electrical transmission circuit and a pickup assembly.

Figure 6 is a schematic diagram illustrating the impedance compensation between the transmission line and a pickup; and

Figure 7 is a schematic diagram of a secondary circuit with a shunt impedance regulator.

The invention is illustrated and will be described as incorporated in a passenger aircraft. It is in this environment that the system is particularly useful. Many features, however, can be used in other power distribution systems, as in an office for example.

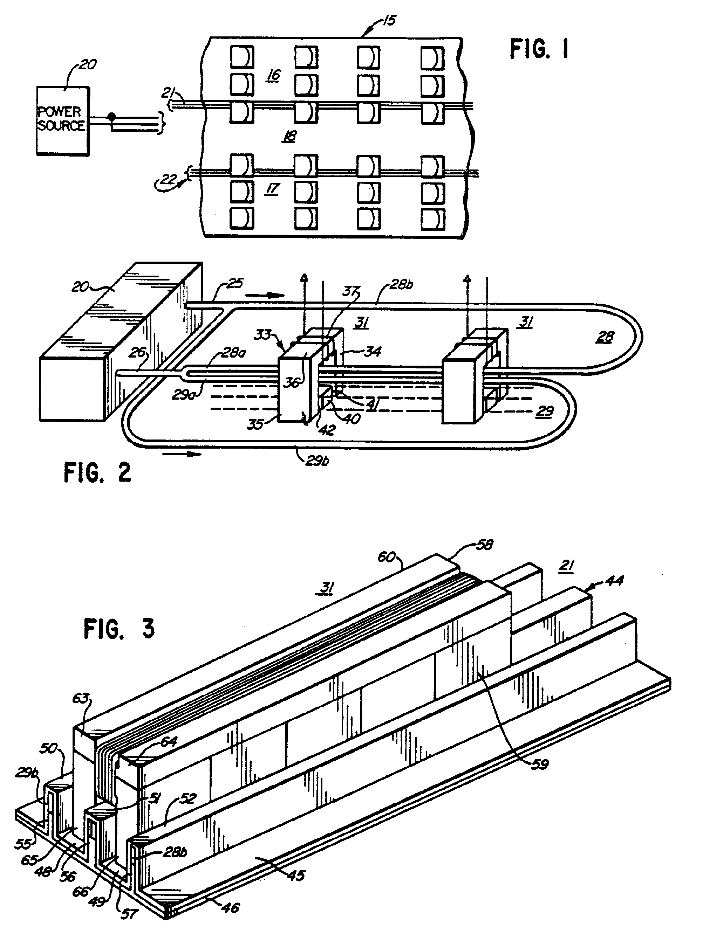

A plan view of a transverse section of an aircraft cabin 15 is shown in Figure 1. Two seat sections 16, 17 are separated by an aisle 18. A power source 20 is connected with two power transmission circuits 21, 22 serving the seat sections 16, 17, respectively. In each section the seats are arranged in rows. Each row in each section is a seat group, here shown as three seats. In a typical commercial aircraft, seat groups are mounted in seat tracks (not shown in Figure 1) and may be positioned longitudinally of the aircraft for a desired seat spacing configuration. Where the seats have electrical plug connectors for electrical service, audio signals, lighting control and the like, the electrical connectors must be mated and demated when the seats are moved and the choice of seat configuration is limited. With the connectorless electrical systems of Kuo and as disclosed herein, any seat spacing may be used and mating and demating of connectors is eliminated.

As discussed in Kuo, audio signals can be transmitted between the source or head end of the system and circuits (not shown in detail) at each seat. In addition, video and data signals can be transmitted to provide audio and video entertainment to the passengers, seat light control, attendant signaling or the like from the seat passenger to a central station associated with the power unit.

The power source 20 provides AC power at 28 kilohertz and has two terminals 25, 26. The power source is shown in Figure 2 with one of the transmission circuits of Figure 1. Each transmission circuit has a dual primary with two conductor loops 38, 29. Each conductor loop has a first segment 28a, 29a both connected with one terminal 26 of the power source. The loops 28, 29 have second segments 28b, 29b connected with the other power source terminal 25. The first loop segments 28a, 29a extend through the area served by the power system adjacent each other. The second loop segments 28b, 29b extend through the area spaced from and one on either side of the adjacent first segments. The four circuit loop segments 28a, 29a, 28b, 29b are preferably substantially coplanar.

The 28 kilohertz frequency is selected to minimize interference of the fundamental and its principal harmonics with other signals used in navigating or operating the aircraft. Other power frequencies could be used.

A receiver is typically provided for each seat group, here shown as three seats in a row. Each receiver includes a secondary pickup assembly 31, two of which are shown diagrammatically in Figure 2.

The secondary pickup assembly has a U-shaped core 33 which may be of ferrite. The U-shaped core 33 has legs 34, 35 which embrace the primary conductor (first loop segments 28a, 29a) and a center section 36 on which a multi-turn secondary coil 37 is wound. Physically associated with the first segment conductors 28a, 29a is a ferrite bar 40 which is positioned between the ends of the core legs, 34, 35 and completes the magnetic circuit. Ferrite is a brittle material and the bar 40 which extends the length of conductor segments 28a, 29a (as indicated by broken lines) is preferably made up of short sections having a length of the order of one-half inch.

Two air gaps 41, 42 between the legs 34, 35 and bar 40 have a constant total dimension regardless of the relative position of the secondary core with respect to the bar. The transmission circuit and the secondary pickup assembly form a transformer with the conductor loops 28, 29 forming a single turn, two conductor primary, and the winding 37 a multi-turn secondary. Further details of the power circuit for a receiver are discussed below.

The two conductor loops 28, 29 providing a small area circuit tends to limit the stray magnetic fields. This further reduces the risk of interference between the seat electrical system and navigation or operation of the aircraft.

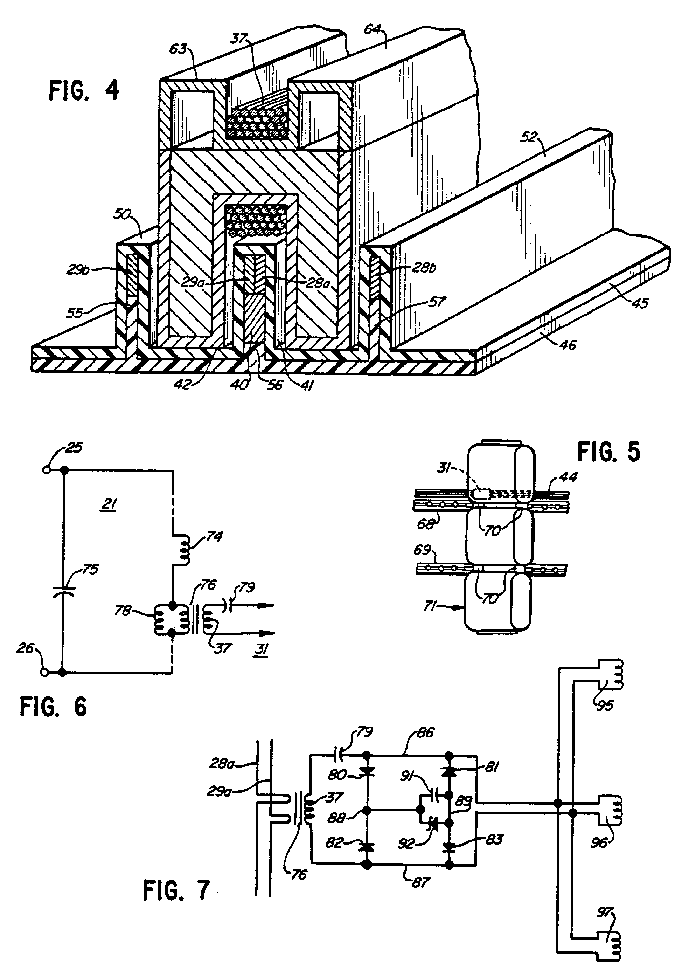

A preferred physical embodiment of the transmission circuit 21 and the pickup assembly 31 is shown in detail in Figures 3 and 4. The transmission circuit segments 28a, 29a, 28b and 29b are preferably rectangular cross-section litz conductors. The transmission circuit conductors and ferrite bar 40 have a track-like housing 44 of insulating material with a cover 45 and base 46. Cover 45 has two channels 48, 49 defined by upwardly extending, downwardly opening pockets 50, 51 and 52. Base 46 has longitudinally extending ribs 55, 56 and 57 which extend into the pockets 50, 51 and 52, respectively. The cover and the base may be molded or extruded of plastic material. The first conductor loop segments 28a, 28b are located side-by-side in the center pocket 51, above the ferrite bar 40. The second conductor loop segments 29b, 28b are located in pockets 50, 52, respectively, substantially coplanar with the first conductor segments 29a, 28a. Base ribs 55, 56 and 57 hold the conductors and ferrite bar in place.

Pickup assembly 31 also has a nonconductive housing 58 with a U-shaped section 59 and a ribbed cover 60. Housing section 59 receives the U-shaped ferrite core 33. Cover 60 has longitudinally extending lateral ribs 63, 64 which with the housing legs 65, 66 define a bobbin on which secondary coil 37 is wound.

For the aircraft system disclosed herein the track housing 44 may have a height of the order of 1.91 cm (0.750″) and a width of the order of 6.35 cm (2.5″). The width of each channel is 1.27 cm (0.5″). The pickup assembly legs have a width of 0.95 cm (0.375″) and the height of the pickup assembly is 4.13 cm (1.625″). The thickness of the plastic housing is 0.16 cm (0.062″) and the overall height of the track and pickup is 4.45 cm (1.75″). The close spacing of the conductor loop segments minimizes the extent of the stray magnetic field.

As best seen in Figure 5, two seat mounting tracks 68, 69 extend longitudinally of the aircraft in the cabin floor and receive the legs 70 of a seat group 71. The power track 44 is also located in the cabin floor and extends parallel with the seat mounting track 68. Pickup assembly 31 is physically mounted to the seat group with the legs 65, 66 extending into track channels 48, 49. As the seats are moved longitudinally of the aircraft to change the seat spacing, the pickup slides in the track.

The difference of 0.32 cm (0.125″) in nominal width of the pickup assembly legs 65, 66 and the track channels 48, 49 provides adequate tolerance to avoid binding between the track and pickup as the seat group is moved. The difference in dimension and the thickness of the plastic track and pickup covers 44, 58 provide an effective gap of 0.64 cm (0.250″) in the magnetic circuit of the U-shaped core 33 and ferrite bar 40.

The seat mounting tracks 68, 69 have a cover between seat groups, not shown in Figure 5. The power transmission track 44 preferably has a conductive cap (not shown) between pickup units, which keeps out foreign objects and reduces electromagnetic radiation and interference.

Figure 6 is a simplified equivalent circuit for the power transmission system. Circuit 21 is connected with power source terminals 25, 26. Inductor 74 represents the inductance of the conductor loops and is a function of the loop length. Capacitor 75 is in the power source 20 and compensates for the reactance of the conductor loop. Its value is also a function of loop length. Transformer 76 represents the inductive coupling between the primary conductor loops 28, 29 and the secondary coil 37 of the pickup assembly. Inductor 78 represents the source impedance as seen from the load. Capacitor 79 in the pickup load power circuit compensates for the source impedance, inductor 78, in parallel with the transmission loop reactance.

In Figure 7 a portion of the seat group power circuit is shown with a shunt regulator which establishes the impedance of the power circuit so that power is appropriately divided among the several loads connected with the power transmission circuit. The conductor loops 28, 29 form the primary of pickup assembly transformer 76. The secondary winding 37 is connected through compensating capacitor 79 with a bridge circuit of diodes 80, 81, 82, 83. Terminals 86, 87 of the diode bridge are connected across the transformer secondary 37 and a DC shunt regulator circuit is connected across the bridge terminals 88, 89. The shunt regulator circuit includes the parallel combination of capacitor 91 and a Zener diode 92. When the voltage across capacitor 92 exceeds the break-down voltage of Zener diode 92, the diode conducts regulating the DC voltage across bridge terminals 88, 89 and the AC voltage across bridge terminals 86, 87. The regulated AC is connected with the primary windings 95, 96 and 97 for AC circuits associated with the three seats of seat group 71. If DC power is needed, it is distributed from terminals 88, 89. In a typical system the Zener diode 92 for each of the loads will have the same voltage characteristic. Thus, the impedance of the power circuit for each load will be the same and power will divide equally among the system loads.

If more accurate regulation of voltage is desirable, Zener diode may be replaced with a closed loop feed-back circuit. The output voltage is monitored and the shunt impedance is varied accordingly.

## Claims

1. A system for inductively coupling AC power from a power source (20) having two terminals (25, 26) to each of a plurality of receiver units, comprising a transmission circuit (21) having a conductor network (28, 29) connected to the terminals of the power source and extending through an area containing the receiver units from the power source (20) to a remote location, CHARACTERISED IN THAT the conductor network (28, 29) has two series-connected legs of which first leg extends from a first terminal (26) of the power source to the remote location and the second leg which extend from the remote location to the second terminal (25) of the power source, is divided into two segments (28b, 29b) positioned one on each side and spaced apart from but closely adjacent to the first leg.

2. A system according to claim 1, wherein the first leg of the conductor network (28. 29) is divided into two segments (28a, 29a) positioned adjacent one another.

3. A system according to claim 1 or claim 2, wherein each of the segments (28b, 29b) of the conductor network (28, 29) is generally rectangular in cross section.

4. A system according to any of claims 1 to 3 for operation at a frequency of the order of 28KHZ, wherein the legs of the conductor network (28, 29) are of litz wire.

5. A system according to any preceding claim further including an insulating housing (44) for the legs of the conductor network (28, 29) the housing (44) having means which engage each of the legs to maintain the segments (28b, 29b) of the second leg spaced apart from but closely adjacent the first leg.

6. A system according to claim 5, wherein the housing (44) has three parallel, longitudinally extending, spaced apart coplanar conductor pockets (50, 51, 52) with the first leg of the conductor network (28, 29) in the centre pocket (51) and one of the segments (28b, 29b) of the second leg of the conductor network (28, 29) in each of the outer pockets (50, 52).

7. A system according to claim 5 or claim 6, wherein the housing (44) includes a base (46) with three longitudinally extending ribs (55, 56, 57) which extend into the pockets (50, 51, 52) positioning the segments of the conductor network therein.

8. A system according to any of claims 5 to 7 further including a secondary pickup assembly for a receiver unit, comprising a U-shaped core (33) having two legs (34, 35), and a secondary circuit coil (37) on the core (33), the legs (34, 35) of the U-shaped core (33) embracing the first leg of the conductor network to couple a signal from the transmission circuit (21) to the secondary circuit coil (37).

9. A system according to claim 8, wherein the housing (44) has two channels (48, 49), one channel (48, 49) between the centre pocket (51) and each of the outer pockets (50, 52), and the legs (34, 35) of the U-shaped core (33) extend into the channels (48, 49).

10. A system according to claim 8 or claim 9, wherein the legs (34, 35) of the U-shaped core (33) have ends which extend beyond the segments of the conductor network (28, 29), and a core element (40) is positioned adjacent the first leg of the conductor network (28, 29) and between the legs (34, 35) of the U-shaped core (33).

## Patentansprüche

1. Ein System zur induktiven Ankopplung der WS-Leistung einer Stromquelle (20) mit zwei Klemmen (25, 26) an jede von einer Mehrzahl von Empfängereinheiten, das einen Übertragungskreis (21) mit einem Leiternetz (28, 29) umfaßt, das mit den Klemmen der Stromquelle verbunden ist und durch den Bereich, der die Empfängereinheiten enthält, von der Stromquelle (20) zu einem Fernstandort verläuft, DADURCH GEKENNZEICHNET, daß das Leiternetz (28, 29) über zwei reihengeschaltete Zweige verfügt, wovon der erste Zweig von einer ersten Klemme (26) der Stromquelle zum Fernstandort verläuft und der zweite Zweig, der von dem Fernstandort zur zweiten Klemme (25) der Stromquelle verläuft, in zwei Segmente (28b, 29b) eingeteilt ist, die jeweils an jeder Seite und in nächster Nähe des ersten Zweiges mit Zwischenraum angeordnet sind.

2. Ein System gemäß Anspruch 1, bei dem der erste Zweig des Leiternetzes (28, 29) in zwei Segmente (28a, 29a) eingeteilt ist, die nebeneinander angeordnet sind.

3. Ein System gemäß Anspruch 1 oder Anspruch 2, bei dem jedes der Segmente (28b, 29b) des Leiternetzes (28, 29) im Querschnitt prinzipiell rechteckig ist.

4. Ein System gemäß einem der Ansprüche 1 bis 3 für den Betrieb bei einer Frequenz von etwa 28 kHz, bei dem die Zweige des Leiternetzes ( 28, 29 ) aus Litzendraht bestehen.

5. Ein System gemäß irgend einem der vorhergehenden Ansprüche, welches ferner ein abgedichtetes Gehäuse (44) für die Zweige des Leiternetzes (28, 29) umfaßt, und bei dem das Gehäuse (44) über Mittel verfügt, die in jeden der Zweige eingreifen so, daß die Segmente (28b, 29b) des zweiten Zweiges mit Zwischenraum zum aber in nächster Nähe vom ersten Zweig gehalten werden.

6. Ein System gemäß Anspruch 5, bei dem das Gehäuse (44) über drei parallele, längsverlaufende, mit Zwischenraum angeordnete, in derselben Ebene liegende Leitertaschen (50, 51, 52) verfügt, wobei der erste Zweig des Leiternetzes (28, 29) in der mittleren Tasche (51) und jedes der Segmente (28b, 29b) des zweiten Zweiges des Leiternetzes (28, 29) jeweils in einer der außenliegenden Taschen (50, 52) liegt.

7. Ein System gemäß Anspruch 5 bzw. 6, bei dem das Gehäuse (44) auch eine Grundplatte (46) mit drei längsverlaufenden Stegen (55, 56, 57) umfaßt, die in die Taschen (50, 51, 52) eingreifen so, daß sie die Segmente des Leiternetzes darin positionieren.

8. Ein System gemäß einem der vorhergehenden Ansprüche 5 bis 7, das ferner eine Sekundärgebergruppe für eine Empfängereinheit umfaßt, bestehend aus einem U-förmigen Kern (33) mit zwei Schenkeln (34, 35) und einer Sekundärkreiswicklung (37) am Kern (33), wobei die Schenkel (34, 35) des U-förmigen Kerns (33) den ersten Zweig des Leiternetzes umfassen, um ein Signal aus dem Übertragungskreis (21) an die Sekundärkreiswicklung (37) anzukoppeln.

9. Ein System gemäß Anspruch 8, bei dem das Gehäuse (44) über zwei Kanäle (48, 49) verfügt so, daß die Kanäle (48, 49) Jeweils zwischen der mittleren Tasche (51) und einer der außenliegenden Taschen (50, 52) liegen, und die Schenkel (34, 35) des U-förmigen Kerns (33) in die Kanäle (48, 49) eingreifen.

10. Ein System gemäß Anspruch 8 oder 9, bei dem die Enden der Schenkel (38, 39) des U-förmigen Kerns (33) über die Segmente des Leiternetzes (28, 29) hinaus reichen, und ein Kernelement (40) neben dem ersten Zweig des Leiternetzes (28, 29) und zwischen den Schenkeln (34, 35) des U-förmigen Kerns (33) positioniert wird.

## Revendications

1. Système pour connecter en régime inductif une source de courant alternatif (20) possédant deux attaches d'extrémités (25, 26) sur chacune des multiples unités réceptrices, comprenant un circuit de transmission (21) à réseau de conducteurs (28, 29) qui est branché sur les attaches d'extrémité de la source de courant et traversant la zone des unités réceptrices qui s'étend entre la source de courant (20) et un emplacement éloigné, CARACTERISE EN CE QUE le réseau de conducteurs (28, 29) possède deux branches de ligne couplées en amont, et dont la première branche de ligne va d'une première attache d'extrémité (26) de la source de courant jusqu'à l'emplacement éloigné, et dont la seconde branche de ligne, qui va de l'emplacement éloigné jusqu'à la seconde attache d'extrémité (25) de la source de courant, est divisée en deux segments (28b, 29b) positionnés de chaque côté et espacés de, quoique jouxtant, la première branche de ligne.

2. Système selon la revendication 1, caractérisé en ce que la première branche de ligne du réseau de conducteurs (28, 29) est divisée en deux segments (28a, 29a) adjacents.

3. Système selon la revendication 1 ou la revendication 2, caractérisé en ce que chacun des segments (28b, 29b) du réseau de conducteurs (28, 29) est généralement rectangulaire en coupe transversale.

4. Système selon l'une des revendications 1 à 3 pour une exploitation à une fréquence de l'ordre de 28 kHz, caractérisé en ce que les branches de ligne du réseau de conducteurs (28, 29) sont faites en fil de litz.

5. Système selon l'une des revendications précédentes comprenant en plus un carter isolant (44) pour les branches de ligne du réseau de conducteurs (28, 29), le carter (44) étant équipé d'agents qui accouplent les branches de ligne de façon à maintenir les segments (28b, 29b) de la seconde branche de ligne espacés de, quoique jouxtant, la première branche de

**EP 0 287 645 B1**

ligne.

6. Système selon la revendication 5, caractérisé en ce que le carter (44) possède trois poches de conducteurs (50, 51, 52) coplanaires, espacées les unes des autres, disposées dans le sens de la longueur et parallèles, avec la première branche de ligne du réseau de conducteurs (28, 29) dans la poche centrale (51) et l'un des segments (28b, 29b) de la seconde branche de ligne du réseau de conducteurs (28, 29) dans chacune des poches extérieures (50, 52).

7. Système selon la revendication 5 ou la revendication 6, caractérisé en ce que le carter (44) comporte un socle (46) avec trois nervures de renforcement (55, 56, 57) disposées dans le sens de la longueur à l'intérieur des poches (50, 51, 52), et permettant de maintenir en place les segments du réseau de conducteurs.

8. Système selon l'une des revendications 5 à 7 comprenant en plus un ensemble directeur secondaire pour une unité réceptrice, avec un noyau en U (33) possédant deux branches de ligne (34, 35), et une bobine de circuit secondaire (37) montée sur le noyau (33), les branches de ligne (34, 35) du noyau en U (33) tenant la première branche de ligne du réseau de conducteurs embrassée, afin de connecter un signal du circuit de transmission (21) à la bobine de circuit secondaire (37).

9. Système selon la revendication 8, caractérisé en ce que le carter (44) possède deux canaux (48, 49), un canal (48, 49) entre la poche centrale (51) et chacune des poches extérieures (50, 52), et caractérisé en ce que les branches de ligne (34, 35) du noyau en U (33) se prolongent dans les canaux (48, 49).

10. Système selon la revendication 8 ou la revendication 9, caractérisé en ce que les branches de ligne (34, 35) du noyau en U (33) possèdent des extrémités qui se prolongent au-delà des segments du réseau de conducteurs (28, 29), et caractérisé en ce qu'une barre centrale (40) est placée à côté de la première branche de ligne du réseau de conducteurs (28, 29) et entre les branches de ligne (34, 35) du noyau en U (33).

FIG. 1

FIG. 2

FIG. 3

FIG. 4

FIG. 5

FIG. 6

FIG. 7